# EUROPEAN PATENT APPLICATION

(11) **EP 4 822 595 A1**
(43) Date of publication of application: **14.10.2026**
(21) Application number: 26170901.8
(22) Date of filing: 07.04.2026
(51) Int. Cl.: G06N 3/045, G06N 3/0475, G06N 3/0985, G06N 3/0442

(54) **GENERATIVE NEURAL NETWORKS WITH COMPRESSED KEY-VALUE MEMORIES**

(30) Priority: 07.04.2025 US 202563784961 P
(71) Applicant: Google LLC, Mountain View, CA 94043 (US)
(72) Inventor: KARAMI, Mahdi, Mountain View California, 94043 (US); BEHROUZ, Ali, Mountain View California, 94043 (US); KACHAM, Praneeth, Mountain View California, 94043 (US); MIRROKNI, Vahab Seyed, Mountain View California, 94043 (US)
(74) Representative: Varley, James Richard

(57) **Abstract**

Systems and methods for generating a network output using a neural network. In particular, the neural network includes one or more compressive attention layers that each "compress" information into a respective fixed size memory state.

## Description

### BACKGROUND

This specification relates to generating outputs using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current value inputs of a respective set of parameters.

### SUMMARY

This specification describes a system implemented as computer programs on one or more computers in one or more locations that trains, implements, or both a neural network to perform one or more machine learning tasks on a network input. More specifically, the neural network is a generative neural network that includes one or more compressive attention layers.

The subject matter described in this specification can be implemented in particular embodiments so as to realize one or more of the following advantages.

The attention mechanism has become a cornerstone of sequence modeling, offering significant advantages over traditional recurrent and convolutional approaches. By enabling models to dynamically attend to relevant parts of an input sequence while leveraging parallel computation, it effectively captures long-range dependencies and enables in-context learning. These strengths have driven its widespread adoption across various domains, including natural language processing (NLP) and computer vision. However, despite its effectiveness, the quadratic time and space complexity of attention limits its scalability in long sequence modeling. Additionally, its reliance on an unbounded cache leads to inefficient memory management, further limiting its applicability in resource-constrained settings.

More specifically, systems implementing layers with attention mechanisms add a new key and a new value to an unbounded in size key-value (KV) cache as generation progresses. In conventional auto-regressive decoding, specifically with Transformer models, Key-Value (KV) caches are used to store the keys and values computed for all previously processed tokens in the input sequence. During the auto-regressive generation process, each new token needs to compute attention against the keys and values of all preceding tokens. Instead of recomputing these keys and values vectors for every preceding token at every generation step (which would involve repeatedly processing the entire preceding sequence), they are saved, or "cached," in the KV cache. Thus, the primary advantage of the KV cache is a significant reduction in computation time, especially during inference for long sequences, because keys and values for preceding tokens are re-used rather than needing to be re-computed at each generation step.

Despite their computational benefits, conventional KV caches introduce significant memory overhead. For a sequence of length L, a model with N_layers layers, a hidden dimension D_model, and H attention heads, the total size of the KV cache grows linearly with L and is proportional to L x N_layers x D_model x 2 (to account for both Ks and Vs). That is, the size of the KV cache is unbounded and grows each time a new token is generated.

Crucially, this cache size is proportional to the length of the full context window and must be stored in memory for the duration of the generation process. As modern models are trained on increasingly large context windows, the memory required for the KV cache becomes substantial.

The requirement for this large, high-speed memory poses a particular challenge for High Bandwidth Memory (HBM), which is typically used with high-performance accelerators like GPUs and TPUs. While HBM offers extremely high throughput, its total capacity is limited and expensive. The memory footprint of the unbounded KV cache can quickly exhaust the available HBM, thereby limiting the maximum sequence length that can be processed and the batch size that can be used during inference. This limitation severely constrains the deployment of large models, particularly in resource-constrained or cost-sensitive environments.

This specification, on the other hand, describes a compressive attention layer that efficiently compresses the cache into a fixed number of memory slots, achieving sub-quadratic complexity. That is, rather than employing an unbounded cache that grows each time a new token is processed or generated by the neural network, the described techniques compress the cache into a fixed number of memory slots, so that the size of the cache remains constant as new tokens are processed and generated.

In particular, the layer makes use of a two-pass recurrent compression mechanism to store new keys and values into memory. For example, the layer can first compress the new key into a compressed key memory in the first pass and then compress the new value into a compressed value memory in the second pass.

To achieve this, it can leverage an online gradient descent procedure with a forget gate, enabling the compressed memory to be updated recursively while learning to retain important contextual information from incoming tokens at test time.

As a result, the described techniques achieve the best perplexity compared to all baselines across diverse context lengths and model sizes.

Moreover, because the size of the cache remains fixed, the described neural network can be efficiently deployed in memory-constrained environments, e.g., mobile devices, smart home devices, or other edge devices, without sacrificing performance. In some cases, because the fixed size of the cache is known a priori, the neural network can be optimized for particular deployment environments, i.e., to make optimal use of the available memory on a given device.

Additionally, this specification describes techniques for implementing the described updates using efficient operations that are optimized for execution on a variety of hardware accelerators.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example neural network system.
FIG. 2 shows an example architecture of the neural network.
FIG. 3 is a flow diagram of an example process for generating an output token.
FIG. 4 shows an example of the performance of the described techniques.

Like reference numbers and designations in the various drawings indicate like elements.

### DETAILED DESCRIPTION

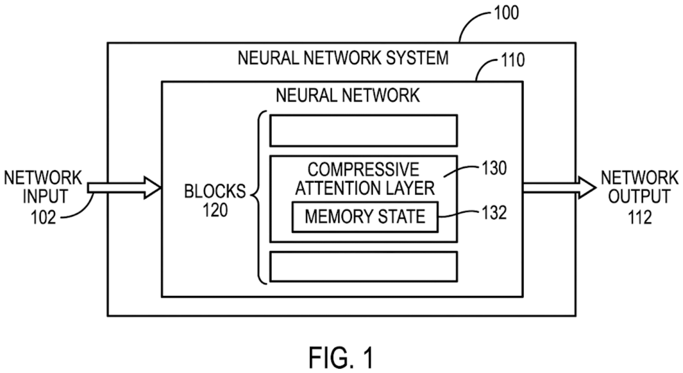

FIG. 1 shows an example neural network system 100. The neural network system 100 is an example of a system implemented as computer programs on one or more computers in one or more locations in which the systems, components, and techniques described below are implemented.

The system 100 trains, implements, or both a neural network 110 to perform one or more machine learning tasks on a network input 102.

The machine learning tasks can include any machine learning task that (i) operates on a network input 102 that is an input sequence, (ii) generates a network output 112 that is an output sequence, or (iii) both.

Some examples of machine learning tasks that the neural network 110 can be configured through training to perform are discussed below.

As one example, the task may be a neural machine translation task. For example, if the input to the neural network is a sequence of text, e.g., a sequence of words, phrases, characters, or word pieces, in one language, the output generated by the neural network may be a translation of the sequence of text into another language, i.e., a sequence of text in the other language that is a translation of the input sequence of text. As a particular example, the task may be a multi-lingual machine translation task, where a single neural network is configured to translate between multiple different source language - target language pairs. In this example, the source language text may be augmented with an identifier that indicates the target language into which the neural network should translate the source language text.

As another example, the task may be an audio processing task. For example, if the input to the neural network is a sequence representing a spoken utterance, the output generated by the neural network may be a score for each of a set of pieces of text, each score representing an estimated likelihood that the piece of text is the correct transcript for the utterance. As another example, if the input to the neural network is a sequence representing a spoken utterance, the output generated by the neural network can indicate whether a particular word or phrase ("hotword") was spoken in the utterance. As another example, if the input to the neural network is a sequence representing a spoken utterance, the output generated by the neural network can identify the natural language in which the utterance was spoken.

As another example, the task can be a natural language processing or understanding task, e.g., an entailment task, a paraphrase task, a textual similarity task, a sentiment task, a sentence completion task, a grammaticality task, and so on, that operates on a sequence of text in some natural language.

As another example, the task can be a text to speech task, where the input is text in a natural language or features of text in a natural language and the network output 112 is a spectrogram, a waveform, or other data defining audio of the text being spoken in the natural language.

As another example, the task can be a health prediction task, where the input is a sequence derived from electronic health record data for a patient and the output is a prediction that is relevant to the future health of the patient, e.g., a predicted treatment that should be prescribed to the patient, the likelihood that an adverse health event will occur to the patient, or a predicted diagnosis for the patient.

As another example, the task can be a text generation task, where the input is a sequence of text, and the output is another sequence of text, e.g., a completion of the input sequence of text, a response to a question posed in the input sequence, or a sequence of text that is about a topic specified by the first sequence of text. In this example, both the input sequence of text and the output sequence of text can include tokens from a vocabulary of text tokens that includes, e.g., one or more of characters, sub-words, words, punctuation marks, numbers, or other symbols that appear in a natural language or a computer language.

As a similar example, the task can be an automatic code generation task, where the input is a sequence of words, wordpieces or characters in a first natural language and the output is a sequence of tokens that represent instructions in a computer programming or markup language, or instructions for controlling an application program to perform a task e.g. build a data item such as an image or web page.

As a particular example of this, the input can represent a context input that includes a text description of a desired piece of code or a snippet of computer code in a programming language and the output can be an output sequence that includes computer code, e.g., a snippet of code that is described by the context input or a snippet of code that follows the context input in a computer program.

As another example, the input to the text generation task can be an input other than text, e.g., an image or audio, and the output sequence can be text that describes the input. In this example, both the input sequence of text and the output sequence of text can include tokens from a vocabulary of tokens that includes tokens that can represent data other than text, in addition to the text tokens mentioned above.

For example, the vocabulary of tokens can additionally include image tokens that represent a discrete set of image patch embeddings of an image that can be generated by an image encoder neural network based on processing the image patches of the image. As another example, the vocabulary of tokens can additionally include audio tokens that represent code vectors in a codebook of a quantizer, e.g., a residual vector quantizer.

As another example, the task can be an image generation task, where the input is a conditioning input, e.g., text, a lower-resolution image, or a partial image, and the output is a sequence of intensity value inputs for the pixels of an image.

As another example, the task can be an image processing task. For example, the input can be the intensity values of the pixels of the image or an encoded representation of the intensity values of the pixels generated by an encoder neural network, and the network output 112 can be (i) an image classification output that classifies the input image into one of a plurality of object categories (ii) an object detection output, i.e., a sequence that specifies the coordinates of one or more bounding boxes in the image that are predicted to encompass objects or (iii) a segmentation output that classifies each pixel in the input image into one of a plurality of categories. As another example, the input can include the intensity values of the pixels of the image or an encoded representation of the intensity values of the pixels generated by an encoder neural network and optionally text, and the network output 112 can be text that characterizes the image, e.g., captions the image or answers a question posed by the text in the input about the image.

As another example, the task can be an audio generation task, where the input is a conditioning input, e.g., text, an image, or context audio, and the output is a sequence of tokens that represents audio.

As another example, the task can be an audio processing task. For example, the input can include audio or an encoded representation of the audio generated by an encoder neural network, and the network output 112 can be text or an image that characterizes the audio.

As another example, the task can be an agent control task, where the input is a sequence of observations or other data characterizing states of an environment and the output defines an action to be performed by the agent in response to the most recent data in the sequence. The agent can be, e.g., a real-world or simulated robot, a control system for an industrial facility, or a control system that controls a different kind of agent.

As another example, the task can be a genomics task, where the input is a sequence representing a fragment of a DNA sequence or other molecule sequence and the output is either an embedding of the fragment for use in a downstream task, e.g., by making use of an unsupervised learning technique on a data set of DNA sequence fragments, or an output for the downstream task. Examples of downstream tasks include promoter site prediction, methylation analysis, predicting functional effects of non-coding variants, and so on.

In some cases, the machine learning task is a combination of multiple individual machine learning tasks, i.e., the neural network is configured to perform multiple different individual machine learning tasks, e.g., two or more of the machine learning tasks mentioned above. For example, the neural network can be configured to perform multiple individual natural language understanding tasks, with the network input 102 including an identifier for the individual natural language understanding task to be performed on the network input 102.

In some cases, the machine learning task is a multi-modal processing task that requires processing multi-modal data. In general, multi-modal data is a combination of two or more different types of data, e.g., two or more of audio data, image data, text data, or graph data. As one example the multi-modal data may comprise audio-visual data, comprising a combination of pixels of an image or of video and audio data representing values of a digitized audio waveform. As another example the multi-modal data may comprise a combination of i) text data representing text in a natural language and ii) pixels of an image or of video or audio data representing values of an audio waveform. Optionally, but not necessarily, the different types of data may represent the same or overlapping objects using the different modalities (types), and when processing multi-modal data the data may be mapped into a common embedding space.

As a particular example, the task can be a multi-modal processing task that requires processing both text and image inputs, so that the neural network includes both a computer vision neural network and a text processing neural network. That is, the target output to be generated by the computer vision neural network for a given image depends on one or more outputs generated by the text processing neural network for one or more corresponding text inputs (and vice versa). Examples of such tasks include open-vocabulary image classification, open-vocabulary object detection, image captioning, text-based image search, image-based retrieval, and so on.

More generally, the multi-modal processing task may correspond to any of the tasks previously described for any of the types of data making up the multi-modal combination. For example, an accuracy of the previously described tasks may be increased when the task is applied to multi-modal data combining the data for which the task has been previously described and another type of data. For example detection or classification of an object or event may be improved when data of multiple different types (modalities) is processed. As another example, the quality (e.g., accuracy, fidelity, or intelligibility) of a generated image, video, or audio may be improved when data of multiple different types (modalities) is processed.

In some cases, once trained, the neural network 110 can perform tasks that it was not explicitly trained to perform. For example the neural network 110 can perform translation tasks (provided that the training corpus included words in different languages), generative tasks, and many other tasks.

In these cases, the neural network 110 can be made to perform a particular task by providing a natural language description of the desired response as a part of the input or "prompt". The prompt may include a few-shot prompt where a few, e.g., 1 to 10, examples of a query and an example output are provided in the text prior to the actual query. Instead or in addition, the prompt may include a natural language or structured instruction that describes the task to be carried out on the input.

Additional description of generative tasks that the neural network 110 (when configured as a "generative" neural network) can perform are discussed below.

Generally, the generative neural network is configured to process a conditioning input ("prompt") to generate a data item. Generally, the data item represents a response to the conditioning input which may be, e.g. a "prompt" for the generative neural network. For example, the conditioning input can characterize one or more desired properties for the generated data item.

In some implementations the generative neural network generates an output token sequence from an input token sequence including the conditioning input. The generative neural network may then be configured to process the input token sequence to generate for each position in the output token sequence, a respective score for each token in a vocabulary of output tokens, that is used to select an output token for the output token sequence.

In some implementations the tokens can represent text, e.g., words, wordpieces or characters, in a natural or computer language. For example, text may be received, e.g., as a series of encoded characters, e.g. UTF-8 encoded characters; such "characters" can include Chinese and other similar characters, as well as logograms, syllabograms and the like. A text encoder, i.e. a tokenizer, can process a sequence of text to represent the text as a series of text tokens from a vocabulary of text tokens, e.g. that each represent words, wordpieces or characters in a natural or computer language. The computer language may be any formal language used to communicate with a computer, e.g. a markup language, or a command or configuration language, or a data exchange language such as JSON, or a programming language. The tokenizer can, e.g., implement BPE (Byte Pair Encoding) or Wordpiece tokenization. Optionally the text can be obtained from audio data representing speech; the output tokens may be converted into audio data that represent speech corresponding to the text.

Also, or instead the tokens may represent an image. For example, a set (sequence) of input or output tokens can represent an image. Each image token may comprise a block encoding of values of the pixels in a different region of an image that maps a set of values of the pixels to a respective image token. The block encoder may comprise a neural network, e.g. having one or more (self-)attention layers, such as a Transformer neural network.

Also, or instead the tokens may represent an audio waveform. For example, a set (sequence) of input or output tokens can represent audio data representing a waveform e.g. instantaneous audio amplitude values or time-frequency audio data. Each image token may comprise a block encoding of the audio waveform in a different time segment of the audio that maps a set of values representing the audio waveform to a respective image token. The block encoder may comprise a neural network, e.g. having one or more (self-)attention layers, such as a Transformer neural network.

In a multimodal system audio data or an image may be flagged by a start-of-audio token or start-of-image token.

In some implementations the generative neural network can be a multimodal network that is configured to process a conditioning input comprising one or more of text data, audio data defining an audio signal (e.g. as amplitude values of the audio signal or as a time-frequency representation of the audio signal), or a still or moving image (e.g. as image pixel values), to generate a data item that can similarly comprise text data, audio data, or a still or moving image.

For example, the conditioning input may comprise text and the data item may comprise an image or an audio signal that represents speech an image generated in response to the text, e.g. described by the text. Also, or instead the conditioning input may comprise an audio signal that represents speech, or an image, and the data item may comprise text, e.g. that describes the conditioning input.

As another example the conditioning input may comprise an observation, e.g. of a real world environment, e.g. from sensor such as a camera or other image sensor; and optionally additional information such as information defining a particular task to be deformed. The output data item may comprise agent control data that defines one or more actions to be performed by an agent, e.g. by a mechanical agent such as a robot or autonomous vehicle, to perform a task. The reward model(s) may, e.g., define a preferred trajectory of motion of the mechanical agent in the (real-world) environment.

In some implementations the generative neural network may comprise a language and/or image generation neural network, that may have been trained before being fine-tuned by the above described method. The conditioning input may comprise a prompt, e.g. a natural or computer language prompt for the generative neural network. The generated data item may comprise a natural or computer language and/or image response to the prompt.

In general, the neural network can have any appropriate architecture to enable it to perform these machine learning tasks, e.g., to perform a generative task by processing the conditioning input to generate the data item.

The neural network 110 includes a sequence (or stack) of blocks 120. A block 120 refers to a group of one or more contiguous neural network layers in a neural network.

The neural network 110 includes a plurality of neural network layers, and each block 120 includes a different subset of the plurality of neural network layers.

The plurality of neural network layers can include any kind of neural network layers, for example, Long Short-Term Memory (LSTM) layers, gated recurrent units (GRUs), or other recurrent neural network layers, convolutional layers, fully-connected layers, embedding layers, activation layers, or attention layers.

An attention layer is a neural network layer that applies an attention mechanism. Generally, to apply the attention mechanism, the attention layer uses one or more attention heads. Each attention head generates a set of queries, a set of keys, and a set of values, and then applies any of a variety of variants of query-key-value (QKV) attention using the queries, keys, and values to generate an output. When there are multiple attention heads, the attention layer then combines the outputs of the multiple attention heads, e.g., by concatenating the outputs and, optionally, processing the concatenated outputs through a linear layer.

Examples of QKV attention variants are described in Vaswani, et al, attention Is All You Need, arXiv:1706.03762, Raffel, et al, Exploring the Limits of Transfer Learning with a Unified Text-to-Text Transformer, arXiv:1910.10683, Devlin et al, BERT: Pre-training of Deep Bidirectional Transformers for Language Understanding, arXiv:1810.04805, and Kitaev, et al, Reformer: The efficient transformer, arXiv preprint arXiv:2001.04451, the entire contents of which are hereby incorporated by reference herein in their entirety.

Generally, however, at least one of the neural network blocks 120 includes a compressive attention layer 130.

In some cases, the neural network block 120 includes a single compressive attention layer 130 while in other cases the neural network block includes multiple compressive attention layers, e.g., multiple compressive attention layers that operate in parallel on the same input. In these other cases, the neural network block 120 then combines the outputs of the multiple compressive attention layers 130, e.g., by concatenating the outputs and, optionally, processing the concatenated outputs through a linear layer.

As will be described in more detail below, the compressive attention layer 130 is referred to as a "compressive" attention layer 130 because, unlike conventional attention layers, the attention layer 130 maintains a fixed size memory state 132. The memory state is referred to as "fixed size" because the size of the memory state 132 remains the same across each forward pass through the neural network 110 while generating a given network output. For example, the memory state 132 can include a fixed number of vectors that remains the same across each forward pass through the neural network 110.

The neural network 110 is configured to perform a machine learning task by performing one or more forward passes through the sequence of blocks 120 in the neural network 110.

In some cases where the task is a generative task, the neural network 110 can execute an auto-regressive generation process across a plurality of generation steps to generate a data item that is an output sequence made up of tokens from a vocabulary, conditioned on a conditioning input ("prompt") that provides context for the output sequence. In these cases, each generation step corresponds to a respective forward pass through the sequence of blocks.

More specifically, the auto-regressively generated output sequence is created by, at each generation step, generating a particular token in the output sequence conditioned on a current input sequence that includes any tokens that precede the particular token in the output sequence, i.e., the tokens that have already been generated for any previous positions in the output sequence that precede the particular position of the particular token, and the prompt.

For example, the current input sequence when generating a token at any given position in the output sequence can include the input sequence and the tokens at any preceding positions that precede the given position in the output sequence. As a particular example, the current input sequence can include the prompt followed by the tokens at any preceding positions that precede the given position in the output sequence.

More specifically, at each generation step, to generate a particular token at a particular position within an output sequence, the neural network can process the current input sequence to generate a score distribution, e.g., a probability distribution, that assigns a respective score, e.g., a respective probability, to each token in the vocabulary of tokens. The neural network can then select, as the particular token, a token from the vocabulary using the score distribution. For example, the neural network 110 can greedily select the highest-scoring token or can sample, e.g., using nucleus sampling or another sampling technique, a token from the distribution.

In these cases, at each generation step, the current input sequence is received by the first block in the sequence of blocks, and the score distribution is generated by the last block in the sequence of blocks after the neural network has performed a forward pass through the sequence of blocks using the current input sequence.

As will be described in more detail below, at each generation step, each compressive attention layer 130 updates the memory state 132 of the compressive attention layer. The update of the memory 132 is a "compressive" update because the size of the memory state 132 does not change as a result of the update, so that information received by the compressive attention layer 130 is compressed into a fixed size memory, e.g., into a memory having a fixed number of slots, as new inputs are received by the compressive attention layer 130 at new generation steps. This is in contrast to existing attention layers, which add a new key and a new value to an unbounded in size key-value (KV) cache at generation step.

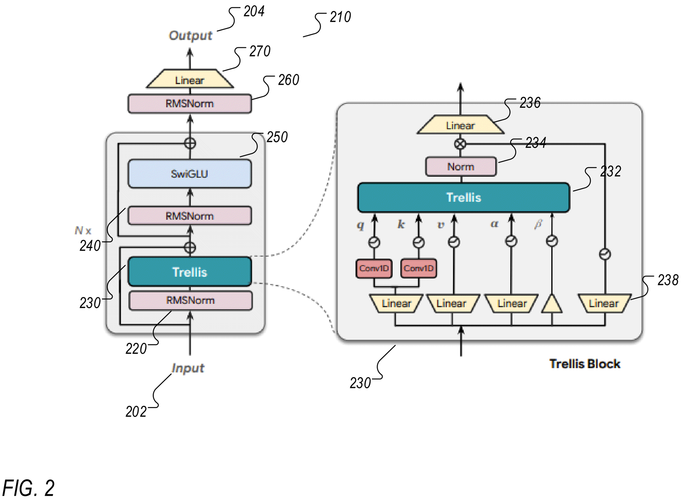

FIG. 2 shows an example 200 of an architecture of the neural network 110.

As shown in the example 200, at a given generation system, the neural network 110 receives an input token 202, i.e., the preceding token generated at the preceding generation system, and generates an output token 204.

To perform the processing, the neural network 110 includes a sequence of blocks that includes main blocks followed by an output block 210.

The main blocks are organized into N instances of a group of main blocks, i.e., N groups of main blocks that each have the same architecture, that includes a Root Mean Square Layer Normalization (RMSNorm) block 220, followed by a compressive attention block 230 (referred to as a Treills block in the example 200), followed by a residual connection between the output of the block 230 and the input 202, followed by another RMSNorm block 240, followed by a Swish-Gated Linear Unit (SwiGLU) block 250, and followed by another residual connection between the output of the block 250 and the output of the residual connection between the output of the block 230 and the input 202.

The output block 210 includes an RMSNorm block 260, followed by a linear layer 270 and, in some cases, followed by one or more additional layers, e.g., a softmax layer.

The compressive attention block 230 receives an input x and includes a compressive attention layer 232 (referred to as a Trellis layer in the example 200), a normalization layer 234, a multiplicative gate between (i) the output of the normalization layer 234 and (ii) an output of a linear layer 238 applied to the input x, and a linear layer 236 applied to the output of the gate.

In particular, the compressive attention block 230 receives an input x and the compressive attention layer 232 generates a query *q,* key *k,* and value v from the input x. The compressive attention layer 232 also generates a target vector α and a forget gate scalar β.

For example, as shown in the example 200, the layer 232 can apply a shared linear layer 282 and then apply a one dimensional (1D) convolution 284 to the output of the shared linear layer 282 to generate the query q while applying another 1D convolution 286 to the output of the shared linear layer 282 to generate the key *k.* As another example, as shown in the example 200, the layer 232 can apply a linear layer 288 to the input x to generate the value v.

As another example, as shown in the example 200, the layer 232 can apply a linear layer 290 to the input x to generate the target vector α. As another example, as shown in the example 200, the layer 232 applies a learned operation, e.g., a learned linear operation optionally followed by a non-linearity, to the input x to generate the forget gate scalar β.

The compressive attention layer 232 then updates the memory state of the compressive attention layer 232 and applies the updated memory state to the query q to generate the output of the compressive attention layer 232.

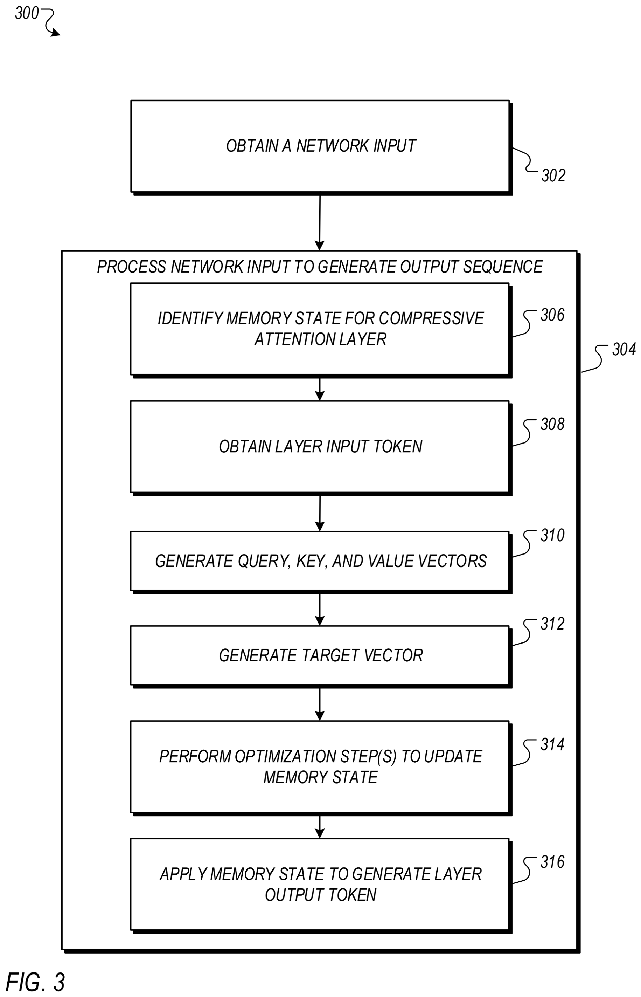

This will be described in more detail below with reference to FIG. 3.

FIG. 3 is a flow diagram of an example process 300 for generating a network output for a machine learning task. For convenience, the process 300 will be described as being performed by a system of one or more computers located in one or more locations. For example, a neural network system, e.g., the neural network system 100 of FIG. 1, appropriately programmed in accordance with this specification, can perform the process 300.

The system obtains a network input (step 302). For example, the network input can include any appropriate type of data, as described above, e.g., one or more of text data, image data, video data, or audio data. As a particular example, as described above, the machine learning task can be a generative task that requires generating an output sequence that represents a data item and the network input can include a conditioning input. For example, the data item can include one or more of: text data, image data, video data, or audio data.

The system processes the network input to generate an output sequence of tokens that includes a respective output token at each of a plurality of output positions (step 304).

Prior to generating the first token in the output sequence of tokens, the system initializes the respective memory state for each compressive attention layer, e.g., to all zeroes or to a set of learned values. Generally, the respective memory state for each compressive attention layer has a fixed size, i.e., includes a fixed number of slots, that does not change as the output sequence is being generated.

The system can then update memory state for each compressive attention layer by processing the network input. For example, for each compressive attention layer, the system can auto-regressively update the memory state for the layer by auto-regressively processing each token in the network input (as described below for the output tokens). As another example, for each compressive attention layer, the system can divide the tokens in the network input into chunks and can perform a parallel update of the memory state for each of the chunks, e.g., using the approximation described below.

More specifically, the system auto-regressively generates the tokens in the output sequence one after the other by, for each token after the first token in the output sequence, processing the output token at the preceding output position using a generative neural network conditioned on the network input to generate the output token at the output position. For the first output token, the system can perform the processing conditioned on the network input.

Generally, the system performs the processing for a given output token by processing the output token at the preceding output position (or, for the first token, the last token in the network input) through the blocks in the generative neural network, with each block other than the last block in the neural network updating a layer input token for the block and providing the updated layer input token generated by the block as input to the next block. The last block in the neural network uses the layer input token to generate the output token at the output position.

As described above, the generative neural network includes a compressive attention layer. Thus, as part of processing the output token at the preceding output position through the blocks in the generative neural network, the system performs steps 306-316 for each compressive attention layer, i.e., to a map a layer input token for the compressive attention layer to a layer output token that is provided as input to the subsequent component in the neural network.

The system identifies a memory state for the compressive attention layer as of the output position (step 306). That is, for the first output position, the system identifies the memory state as the state after being updated by processing the last token in the network input. For any subsequent output position, the system identifies the memory state as the state after being updated at the preceding generation step.

The system obtains a layer input token for the compressive attention layer that is generated from the output token at the preceding output position (step 308).

For example, when the compressive attention layer is the first layer in the corresponding block, the layer input token for the compressive attention layer can be the input token for the corresponding block.

When the compressive attention layer is not the first layer in the corresponding block, the layer input token for the compressive attention layer can be the output token generated by the preceding layer in the corresponding block.

The system generates, from the layer input token for the compressive attention layer, a query vector, a key vector, and a value vector (step 310).

For example, the system can generate the query vector by applying a respective learned transformation to the layer input token. For example, the respective learned transformation can include a linear neural network layer. As another example, the respective learned transformation can include a linear layer followed by a 1-dimensional (1D) convolution.

As another example, the system can generate the key vector by applying a respective learned transformation to the layer input token. For example, the respective learned transformation can include a linear neural network layer. As another example, the respective learned transformation can include a linear layer followed by a 1-dimensional (1D) convolution. As yet another example, as shown in FIG. 2, the respective learned transformation can be shared between the query and key vectors.

As another example, the system can generate the value vector by applying a respective learned transformation to the layer input token. For example, the respective learned transformation can include a linear neural network layer. As another example, the respective learned transformation can include a linear layer followed by a 1-dimensional (1D) convolution.

The system generates, from the layer input token for the compressive attention layer, a target vector (step 312). For example, the system can apply a respective learned transformation to the layer input token as described above to generate the target vector. For example, the learned transformation can be a learned linear transformation.

The system performs a set of one or more optimization steps on a compression objective using the key vector, the value vector, and the target vector to update the memory state for the compressive attention layer (step 314).

Generally, the system updates the memory state while maintaining the size of the memory state, i.e., compresses the information in the key and value vectors into the existing memory state.

For example, the compression objective can measure a difference between (i) the target vector and (ii) a feature map applied to a product of the memory state and an input vector for the compression term. For example, the difference can be an L2 norm. The feature map can be any appropriate function that can be applied to the output of a matrix vector product, e.g., a normalization operation, an element-wise non-linearity, the exponential linear unit + 1 function, and so on.

As a particular example, the compression objective can include a compression term and a regularization term on the memory state.

Generally, the system can perform a two-pass update of the memory state at each generation step. In one pass, the system can update the key cache, i.e., the portion of the memory state that includes information from the key vectors, using the key vector by optimizing the compression objective.

In the other pass, the system can update the value cache, i.e., the portion of the memory state that includes information from the value vectors, using the value vector by optimizing the compression objective.

That is, the memory state includes two-fixed size portions, one (the key cache) that is updated using information from key vectors, and another (the value cache) that is updated using information from value vectors.

For example, the system can perform a first set of one or more optimization steps on the compression objective with the key vector as the input vector to the compression term to generate an initial updated memory state, i.e., that has updated the key portion of the memory state. The system can then perform a second set of one or more optimization steps on the compression objective with the value vector as the input vector to the compression term and starting from the initial updated memory state to update the memory state, i.e., that has updated both the key and value portion of the memory state.

Alternatively, the system can perform a first set of one or more optimization steps on the compression objective with the value vector as the input vector to the compression term to generate an initial updated memory state, i.e., that has updated the value portion of the memory state. The system can then perform a second set of one or more optimization steps on the compression objective with the key vector as the input vector to the compression term and starting from the initial updated memory state to update the memory state, i.e., that has updated both the key and value portion of the memory state.

When the compression objective includes a regularization term, the update at each optimization step depends on a forget gate scalar. In some of these cases, the system can generate the forget gate scalar from the layer input token for the compressive attention layer, e.g., by applying a learned operation as described above. In others of these cases, the system can obtain the forget gate scalar as input, e.g., as a hyperparameter, or can determine the value through a hyperparameter search.

The example where the key cache is updated first will now be described in more detail.

The system represents the compression model as a regression layer that projects a key token into a latent space. Specifically, for each token embedding ***k**ₜ* and its corresponding latent representation ***α**ₜ* at step *t,* the compression layer aims to reconstruct a target vector such that ***α**ₜ* ≈ *φ*(***M**ₜ**k**ₜ*)*.*

To minimize the reconstruction error and the compression loss, the system formalizes the learning objective as an 12 optimization problem: ${L}_{t} = {\left‖ϕ\left({M}_{t}{k}_{t}\right)-{α}_{t}\right‖}^{2} , {M}_{t} ∈ {ℝ}^{m \times d} , {k}_{t} ∈ {ℝ}^{d} , {α}_{t} ∈ {ℝ}^{m}$

Here, ***M**ₜ* represents the portion of the memory state that is updated using key vectors and φ is the feature map.

The system models the latent representation ***α**ₜ* using an encoder network, which is implemented as a linear projection of the input: ***α**ₜ = **W_{α}x**ₜ* with projection weight matrix ***W_{α}***. Thus, the internal memory of the compression layer ***M**ₜ* serves as "fast weights", which are dynamically updated based on streaming input data. Hence, each sequence serves as a training dataset for the learning in this inner loop.

To efficiently adapt to new tokens, the system continuously updates ***M**ₜ*, allowing it to store in-context information. In this framework, the outer network, also referred to as the "slow" network, consists of the projection layer weights and the rest of the model parameters, jointly denoted as **W.** These parameters are trained in the outer loop, which follows standard deep neural network optimization process, minimizing the end-to-end loss averaged over the training dataset to learn generalizable patterns from the training set. An example of this training is described in more detail below.

This learning process subsequently enables fast adaptation within the inner loop. Importantly, the weights of the "slow" network remain frozen during the internal state updates of the inner loop (involving the "fast" weights).

Given the sequential nature of the data, the system updates the internal memory ***M**ₜ* using one gradient descent step per token:
**M_{*t*+1}** = **M*ₜ* - *γₜ*∇_{M}(*Mₜ, υₜ, αₜ*)** where *γₜ* is the learning rate for step *t* and can be a hyperparameter that is received as input by the system.

Across T steps, this update rule generates the sequence of states ${\left\{{M}_{t}\right\}}_{t = 1}^{T}$, where each state ***M**ₜ* is a nonlinear recurrent function of the previous state ***M***_{*t*-1} and the input token ***xₜ*** at the step t. Consequently, the memory update follows a causal nonlinear recurrence, ensuring that information is continually integrated into the memory.

By the chain rule, the gradient of the loss with respect to M can be computed: ${∇}_{M} {{L}^{⌣}}_{t} = {G}_{t} \left({M}_{t - 1}, {α}_{t}, {υ}_{t}\right) = 2 \left({J}_{ϕ}\left(ϕ\left({M}_{t - 1}{k}_{t}\right)-{α}_{t}\right)\right) {{k}_{t}}^{⊤} ,$ where ***J**_{ϕ}* is the Jacobian of *ϕ*.

In practice, terms involving Jacobian products are computed efficiently using the vector-Jacobian product (vjp) method available in modern machine learning frameworks. This avoids explicitly forming the full Jacobian matrix and leverages efficient automatic differentiation.

While the proposed compression layer can address the quadratic time and space complexity of Transformers by learning how to effectively compress key-value pairs (***k**ₜ* , *vₜ*) into fixed-size memory states, these memories can still overfit to early tokens of the sequence or overflow as information accumulates. To mitigate these issues, the system introduces regularization on the memory states applied within the inner loop using a regularization strength ${λ}_{t} : {L}_{t} = {\left‖ϕ\left({M}_{t}{υ}_{t}\right)-{α}_{t}\right‖}^{2} + \frac{{λ}_{t}}{2} {\left‖{M}_{t}\right‖}^{2}$,

This regularized objective results in a gradient descent recurrent update with state decay: ${M}_{t} = \left(1-{λ}_{t}\right) {M}_{t - 1} - {γ}_{t} {∇}_{M} L \left({M}_{t - 1}, {υ}_{t}, {α}_{t}\right) = {β}_{t} {M}_{t - 1} - {γ}_{t} {u}_{t} {k}_{t}^{⊤} ∈ \left[0, 1\right]$ where ${u}_{t}^{⊤} : = {J}_{ϕ} \left(ϕ\left({M}_{t - 1}{k}_{t}\right)-{α}_{t}\right)$.

In this setting, the scalar *βₜ* = 1 - *λₜ* ∈ [0, 1] acts as a forget gate, controlling the retention of prior memory. When *βₜ* → 1, it selectively updates the memory based on the interaction of state and input token without fading its magnitude, while *βₜ* → 0 erases the memory (possibly due to the change of context).

The non-linear nature of the update rule typically hinders straightforward parallelization. The system can address this by dividing the sequence into chunks, and the state at the beginning of each chunk is used to compute the gradients for all time steps within that chunk. In this approach, the gradients within each chunk are approximated as: **∇_{M}** 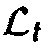 **≈ G*ₜ*(M_{*t*'}, *αₜ*, *υₜ*),** where ***M**_{t'}* represents the state at the beginning of the chunk (i.e., the final state from the preceding chunk and t' = t - mod(t, C) with C denoting the chunk size.

This strategy enables the parallel computation of a mini-batch of stale gradients at the start of each chunk, thereby significantly enhancing scalability. Using this approximation effectively linearizes the general non-linear recurrence (within each chunk), leading to the following recurrent update rule for the internal state and the memory readout of the compression layer: ${\left\{{y}_{t}\right\}}_{t = 1}^{T} = compress \left({\left\{{q}_{t}, {k}_{t}, {α}_{t}\right\}}_{t = 1}^{T}\right) = \left\{\begin{matrix}{M}_{t} = {M}_{t - 1} - 2 {γ}_{t} \left({J}_{ϕ}\left(ϕ\left({M}_{t}, {k}_{t}\right)-{α}_{t}\right)\right) {k}_{t}^{⊤} \\ {y}_{t} = {M}_{t} {q}_{t}\end{matrix}\right.$

This locally linear recurrence satisfies the associative property and can therefore be parallelized by parallel scan (a.k.a. prefix sum), or formulated into a parallel chunkwise form which has been shown to efficiently utilize the matmul units of modern GPUs and can be more I/O efficient.

For example, a hardware-optimized chuck-wise form for the recurrence update with state decay can be defined as follows. In particular, for the b-th block, covering time steps t where bC + 1 ≤ t < (b + 1)C, for r-th local step in the block, define the local cumulative product of decay ${μ}_{r}^{b}$ from the start of the block as: ${μ}_{r}^{b} = {\prod }_{i = bC + 1}^{bC + r} {β}_{i} .$

Also, denote the segmented cumulative product from step i to j within the b-th block (1 ≤ i ≤ j ≤ C) as: ${ω}_{j , i}^{b} = \frac{{μ}_{j}^{b}}{{μ}_{i}^{b}} ,$ and the lower triangular matrix with ${\left[{Ω}^{b}\right]}_{j , i} = {ω}_{j , i}^{b} ∀ i \leq j \left(and 0 otherwise\right) .$

Unrolling the recurrence relation locally within the b-th block obtains: ${M}_{r}^{b} = {β}_{r}^{b} {M}_{r - 1}^{b} - {γ}_{r}^{b} {u}_{r}^{b} {k}_{r}^{{b}^{⊤}} = {μ}_{r}^{b} {M}^{b - 1} - {\sum }_{i = 1}^{b} {γ}_{i}^{b} {Ω}_{r , i} {u}_{i}^{b} {k}_{i}^{{b}^{⊤}}$ where ***M**^{b-1}* is the state at the end of the (b - 1)-th block. Then ***M**^{b}* can be expressed in matrix form as: ${M}^{b} = {μ}^{C} {M}^{b - 1} - {U}^{b} Diag \left(γ⊙{Ω}_{B :}\right) {K}^{{b}^{⊤}}$ where ⊙ is the element-wise product. Also, unrolling the readout step and formulating it in matrix form for the entire block yields: ${Y}^{b} = Diag \left({μ}^{b}\right) {M}^{b} {Q}^{b} - {U}^{b} \left({K}^{{b}^{⊤}}{Q}^{b}⊙Diag\left(γ\right)⊙Ω\right)$ where ${μ}^{b} = \left[{μ}_{1}^{b},…,{μ}_{C}^{b}\right] , and {K}^{b} , {Q}^{b} ∈ {ℝ}^{d \times C} and {U}^{b} , {Y}^{b} ∈ {ℝ}^{m \times C}$ are matrices collecting the corresponding vectors within the block.

The system can then perform similar operations to update the value cache in the second pass. That is, in the second pass, the system performs similar operations, but with the value vector ***v**ₜ* in place of the key vector ***k**ₜ* where used above and ***M**ₜ* referring to the value cache instead of the key cache.

After updating the memory state for the compressive attention layer, the system applies the memory state to the query vector to generate a layer output token for the compressive attention layer (step 316).

Because there are two passes as described above, the system can first generate an initial layer output token by applying the initial updated memory state to the query vector and then apply the second updated memory state, i.e., updated during the second pass, to the initial layer output token to generate the layer output token. The fact that the application of the memory state is referred to as being "after" updating the memory state for the compressive attention can be understood to mean that both the initial layer output token and the layer output token are generated after both passes are performed or that the initial layer output token is generated after the first pass is performed and the layer output token is generated after the second pass is performed.

For example, when the key portion is updated during the first pass, the layer output token can be expressed as: ${\left\{{\hat{y}}_{t}\right\}}_{t = 1}^{T} = compress \left({\left\{{q}_{t}, {k}_{t}, {α}_{t}\right\}}_{t = 1}^{T}\right) , \left\{{\hat{y}}_{t},{α}_{t},\right\} ∈ {ℝ}^{m}$ ${\left\{{y}_{t}\right\}}_{t = 1}^{T} = compress \left({\left\{f\left({\hat{y}}_{t}\right),{υ}_{t},{α}_{t}\right\}}_{t = 1}^{T}\right) , {y}_{t} ∈ {ℝ}^{d} ,$ where *f* is an appropriate element-wise function, e.g., a normalized Sigmoid-Weighted Linear Unit (SiLU) function or a softmax function and the compress function satisfies: $compress \left({\left\{{q}_{t}, {k}_{t}, {α}_{t}\right\}}_{t = 1}^{T}\right) = \left\{\begin{matrix}{M}_{t} = {M}_{t - 1} - 2 {γ}_{t} \left({J}_{ϕ}\left(ϕ\left({M}_{t}, {k}_{t}\right)-{α}_{t}\right)\right) {k}_{t}^{⊤} \\ {y}_{t} = {M}_{t} {q}_{t}\end{matrix}\right.$ when the parallel approximation is used as described above or is equal to the exact form of the update as described above. To achieve the correct dimensionality as a result of the target vector being shared for both caches, for the second pass that updates the value cache, the system can use ${y}_{t} = ϕ \left({M}_{t}^{⊤}, {q}_{t}\right)$ instead of ***yₜ* = *Mₜqₜ.***

That is, in this example, the initial layer output token is generated by determining a product of the initial updated memory state and the query, and the layer output token is generated by determining a product of the transpose of the updated value cache to the output of *f* applied to the initial layer output token and then applying the feature map to the product.

Prior to using the neural network to generate output sequences, the system or another training system trains the neural network. For example, the training system can train the neural network through one or more pre-training stages and, in some cases, one or more fine-tuning stages. For example, the neural network can have been trained using a two-stage approach: a pre-training stage followed by a fine-tuning stage.

In the pre-training stage, the generative neural network is pre-trained by the training system or another system based on optimizing one or more unsupervised or self-supervised objective functions, e.g., a maximum-likelihood objective function or another next token prediction objective, on one or more large datasets and then, in some cases, adjusted to perform generative tasks, which can include any combination of one or more of the generative tasks mentioned below and possibly other tasks, through fine-tuning adaptation based on supervised learning, reinforcement learning from human feedback (RLHF), reinforcement learning from AI feedback (RLAIF), prompt tuning, instruction tuning, and the like, that use different training objectives, different datasets, or both.

The one or more large datasets used during the pre-training stage can include a large dataset of text in one or more natural languages, e.g., text that is publicly available from the Internet or another text corpus, a large dataset of computer code in one or more programming languages, e.g., Python, *C++, C#,* Java, Ruby, PHP, and so on, e.g., computer code that is publicly available from the Internet or another code repository, a large dataset of audio samples, e.g., audio recordings or waveforms that represent the audio recordings, a large dataset of images where each image includes an array of pixels, a large dataset of videos where each video includes a temporal sequence of frames, or a large multi-modal dataset that includes a combination of two or more of these datasets.

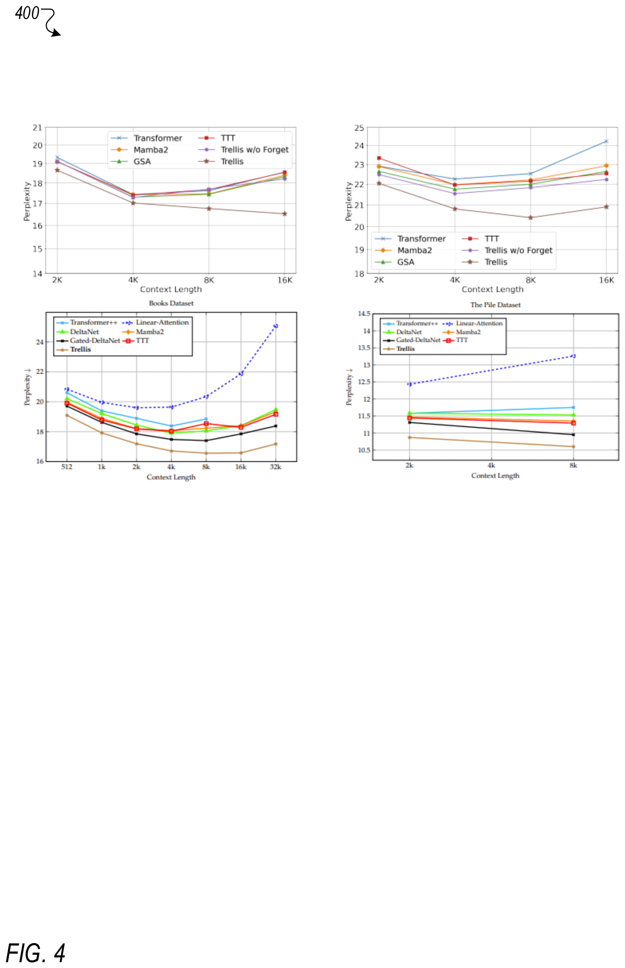

FIG. 4 shows an example 400 of the performance of the described techniques. In particular, the example 400 shows the performance of various models on four data sets. More specifically, the example 400 shows the model perplexity as a function of context length. In more detail: the top left shows the C4 dataset with 350M parameters; the top right shows the C4 dataset with 780M parameters; the bottom left shows the Books dataset with 125M parameters; and the bottom right shows the Pile dataset with 125M parameters. As can be seen from the example 400, the escribed techniques ("Trellis") consistently exhibit lower perplexities than other model types across the multiple different context lengths.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data pre-processing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

Aspects of the disclosure may be as set forth in the following clauses.

Clause 1. A method performed by one or more computers, the method comprising:
obtaining a network input; and
processing the network input to generate an output sequence of tokens that comprises a respective output token at each of a plurality of output positions, the processing comprising, for each of the output positions:
   processing the output token at the preceding output position using a generative neural network conditioned on the network input to generate the output token at the output position, wherein the generative neural network comprises a compressive attention layer, and wherein the processing comprises, for the compressive attention layer:
   identifying a memory state for the compressive attention layer as of the output position;
   obtaining a layer input token for the compressive attention layer that is generated from the output token at the preceding output position;
   generating, from the layer input token for the compressive attention layer, a query vector, a key vector, and a value vector;
   generating, from the layer input token for the compressive attention layer, a target vector;
   performing a set of one or more optimization steps on a compression objective using the key vector, the value vector, and the target vector to update the memory state for the compressive attention layer; and
   after updating the memory state for the compressive attention layer, applying the memory state to the query vector to generate a layer output token for the compressive attention layer.

Clause 2. The method of clause 1, wherein the compression objective comprises a compression term that measures a difference between (i) the target vector and (ii) a feature map applied to a product of the memory state and an input vector for the compression term.

Clause 3. The method of clause 2, wherein the compression objective comprises the compression term and a regularization term on the memory state.

Clause 4. The method of clause 2 or clause 3, wherein performing a set of one or more optimization steps on a compression objective using the key vector, the value vector, and the target vector to update the memory state for the compressive attention layer comprises: performing a first set of one or more optimization steps on the compression objective with the key vector as the input vector to the compression term to generate an initial updated memory state; and performing a second set of one or more optimization steps on the compression objective with the value vector as the input vector to the compression term and starting from the initial updated memory state to update the memory state.

Clause 5. The method of clause 2 or clause 3, wherein performing a set of one or more optimization steps on a compression objective using the key vector, the value vector, and the target vector to update the memory state for the compressive attention layer comprises: performing a first set of one or more optimization steps on the compression objective with the value vector as the input vector to the compression term to generate an initial updated memory state; and performing a second set of one or more optimization steps on the compression objective with the key vector as the input vector to the compression term and starting from the initial updated memory state to update the memory state.

Clause 6. The method of any preceding clause, wherein the update at each optimization step depends on a forget gate scalar.

Clause 7. The method of clause 6, wherein the processing comprises, for the compressive attention layer: generating the forget gate scalar from the layer input token for the compressive attention layer.

Clause 8. The method of any preceding clause, wherein generating, from the layer input token for the compressive attention layer, a target vector comprises: applying a learned transformation to the layer input token for the compressive attention layer to generate the target vector.

Clause 9. The method of clause 8, wherein the learned transformation is a learned linear projection.

Clause 10. The method of any preceding clause when dependent on clause 2, wherein the difference is an L2 norm.

Clause 11. The method of any preceding clause, wherein the machine learning task is a generative task, wherein the network input comprises a conditioning input, and wherein the output sequence represents a data item.

Clause 12. The method of clause 11, wherein the data item comprises one or more of: text data, image data, video data, or audio data.

Clause 13. The method of any preceding clause, wherein the network input comprises one or more of: text data, image data, video data, or audio data.

Clause 14. A system comprising: one or more computers; and one or more storage devices storing instructions that, when executed by the one or more computers, cause the one or more computers to perform the respective operations of any one of clauses 1-13.

Clause 15. One or more computer-readable storage media storing instructions that when executed by one or more computers cause the one or more computers to perform the respective operations of the method of any one of clauses 1-13.

## Claims

1. A method performed by one or more computers, the method comprising:
obtaining a network input; and
processing the network input to generate an output sequence of tokens that comprises a respective output token at each of a plurality of output positions, the processing comprising, for each of the output positions:
processing the output token at the preceding output position using a generative neural network conditioned on the network input to generate the output token at the output position, wherein the generative neural network comprises a compressive attention layer, and wherein the processing comprises, for the compressive attention layer:
identifying a memory state for the compressive attention layer as of the output position;
obtaining a layer input token for the compressive attention layer that is generated from the output token at the preceding output position;
generating, from the layer input token for the compressive attention layer, a query vector, a key vector, and a value vector;
generating, from the layer input token for the compressive attention layer, a target vector;
performing a set of one or more optimization steps on a compression objective using the key vector, the value vector, and the target vector to update the memory state for the compressive attention layer; and
after updating the memory state for the compressive attention layer, applying the memory state to the query vector to generate a layer output token for the compressive attention layer.

2. The method of claim 1, wherein the compression objective comprises a compression term that measures a difference between (i) the target vector and (ii) a feature map applied to a product of the memory state and an input vector for the compression term.

3. The method of claim 2, wherein the compression objective comprises the compression term and a regularization term on the memory state.

4. The method of claim 2 or claim 3, wherein performing a set of one or more optimization steps on a compression objective using the key vector, the value vector, and the target vector to update the memory state for the compressive attention layer comprises:
performing a first set of one or more optimization steps on the compression objective with the key vector as the input vector to the compression term to generate an initial updated memory state; and
performing a second set of one or more optimization steps on the compression objective with the value vector as the input vector to the compression term and starting from the initial updated memory state to update the memory state.

5. The method of claim 2 or claim 3, wherein performing a set of one or more optimization steps on a compression objective using the key vector, the value vector, and the target vector to update the memory state for the compressive attention layer comprises:
performing a first set of one or more optimization steps on the compression objective with the value vector as the input vector to the compression term to generate an initial updated memory state; and
performing a second set of one or more optimization steps on the compression objective with the key vector as the input vector to the compression term and starting from the initial updated memory state to update the memory state.

6. The method of any preceding claim, wherein the update at each optimization step depends on a forget gate scalar.

7. The method of claim 6, wherein the processing comprises, for the compressive attention layer:
generating the forget gate scalar from the layer input token for the compressive attention layer.

8. The method of any preceding claim, wherein generating, from the layer input token for the compressive attention layer, a target vector comprises:
applying a learned transformation to the layer input token for the compressive attention layer to generate the target vector.

9. The method of claim 8, wherein the learned transformation is a learned linear projection.

10. The method of any preceding claim when dependent on claim 2, wherein the difference is an L2 norm.

11. The method of any preceding claim, wherein the machine learning task is a generative task, wherein the network input comprises a conditioning input, and wherein the output sequence represents a data item.

12. The method of claim 11, wherein the data item comprises one or more of: text data, image data, video data, or audio data.

13. The method of any preceding claim, wherein the network input comprises one or more of: text data, image data, video data, or audio data.

14. A system comprising:
one or more computers; and
one or more storage devices storing instructions that, when executed by the one or more computers, cause the one or more computers to perform the respective operations of any one of claims 1-13.

15. One or more computer-readable storage media storing instructions that when executed by one or more computers cause the one or more computers to perform the respective operations of the method of any one of claims 1-13.
